(19) Europäisches Patentamt / European Patent Office / Office européen des brevets

(11) **EP 4 310 055 A1**

(12) **EUROPEAN PATENT APPLICATION**
published in accordance with Art. 153(4) EPC

(43) Date of publication:
**24.01.2024 Bulletin 2024/04**

(21) Application number: **22771130.6**

(22) Date of filing: **03.03.2022**

(51) International Patent Classification (IPC):
**C01G 53/00** (2006.01)  **H01M 4/505** (2010.01)
**H01M 4/525** (2010.01)

(52) Cooperative Patent Classification (CPC):
**C01G 53/00; H01M 4/505; H01M 4/525;**
Y02E 60/10

(86) International application number:
**PCT/JP2022/009161**

(87) International publication number:
**WO 2022/196376 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2021 JP 2021042576**
**02.02.2022 JP 2022015158**

(71) Applicants:
• **Sumitomo Chemical Company Limited**
**Tokyo 103-6020 (JP)**
• **Tanaka Chemical Corporation**
**Fukui-shi, Fukui 910-3131 (JP)**

(72) Inventors:
• **KURODA Tomoya**
**Fukui-shi, Fukui 910-3131 (JP)**
• **KATAGIRI Kazuki**
**Fukui-shi, Fukui 910-3131 (JP)**
• **IIDA Yasutaka**
**Fukui-shi, Fukui 910-3131 (JP)**
• **DEGURA Keiji**
**Fukui-shi, Fukui 910-3131 (JP)**

(74) Representative: **Vossius & Partner**
**Patentanwälte Rechtsanwälte mbB**
**Siebertstrasse 3**
**81675 München (DE)**

(54) **METAL COMPLEX COMPOUND, PRODUCTION METHOD FOR LITHIUM METAL COMPLEX OXIDE, AND PRODUCTION METHOD FOR METAL COMPLEX COMPOUND**

(57) A metal composite compound, in which, in a powder X-ray diffraction measurement using CuKα rays, a relative standard deviation of a volume-based crystallite size distribution calculated from a diffraction peak in a range of 2θ = 19 ± 1° is 0.50 or more.

FIG. 1

**Description**

[Technical Field]

The present invention relates to a metal composite compound, a method for producing a lithium metal composite oxide and a method for producing a metal composite compound.
Priority is claimed on Japanese Patent Application No. 2021-042576 filed March 16, 2021 and Japanese Patent Application No. 2022-015158 filed February 2, 2022, the contents of which are incorporated herein by reference.

[Background Art]

As a method for producing a positive electrode active material for a lithium secondary battery, for example, there is a method in which a lithium compound and a metal composite compound containing a metal element other than Li are mixed and calcined.
As a technique for improving the battery performance of a lithium secondary battery, attempts have been made to control the crystal state of a metal composite compound which is a raw material of a positive electrode active material.
For example, Patent Document 1 discloses that the use of a precursor satisfying a specific half-width in an X-ray diffraction profile for which CuKa rays are used makes it possible to increase the capacity of a lithium secondary battery.

[Citation List]

[Patent Document]

[Patent Document 1]
Japanese Unexamined Patent Application, First Publication No. H10-310433

[Summary of Invention]

[Technical Problem]

The crystal state of the metal composite compound which is a raw material affects the crystal state of a positive electrode active material to be produced. Therefore, with an aim of further improving the battery performance of lithium secondary batteries, there is a demand for metal composite compounds in which the crystal state has been further controlled.
The present invention has been made in view of the above-described circumstances, and an objective of the present invention is to provide a metal composite compound that is a raw material of a positive electrode active material enabling the production of a lithium secondary battery having a high initial efficiency, a method for producing a lithium metal composite oxide using the same, and a method for producing a metal composite compound.

[Solution to Problem]

The present invention includes [1] to [10].

[1] A metal composite compound, in which, in a powder X-ray diffraction measurement using CuKa rays, a relative standard deviation of a volume-based crystallite size distribution calculated from a diffraction peak in a range of 2θ = 19 ± 1° is 0.50 or more.
[2] The metal composite compound according to [1], in which a mode of the crystallite size distribution is 50 Å or more.
[3] The metal composite compound according to [1] or [2], in which an average crystallite size in the crystallite size distribution is 120 Å or more.
[4] The metal composite compound according to any one of [1] to [3], in which a mode/average crystallite size, which is a ratio between a mode of the crystallite size distribution and an average crystallite size in the crystallite size distribution, is 0.57 or less.
[5] The metal composite compound according to any one of [1] to [4], in which Formula (A) below is satisfied.

$$80 \text{ Å} \leq d90 - d10 \cdots \text{ Formula (A)}$$

(In Formula (A), d10 is a crystallite size (Å) at which an area proportion from a small size side is 10% with respect to a total area of a region surrounded by a crystallite size distribution function curve and a horizontal axis in the crystallite size distribution function curve, in which the horizontal axis is a volume-based crystallite size in the crystallite size distribution and a vertical axis is a probability density function of a crystallite with respect to the crystallite size.

d90 is a crystallite size (Å) at which the area proportion from the small size side is 90% with respect to the total area.)

[6] The metal composite compound according to any one of [1] to [5], that is represented by Composition Formula (I) below.

$$Ni_{1-x-y}Co_xM_yO_z(OH)_{2-\alpha} \ldots \qquad \text{Formula (I)}$$

(In Composition Formula (I), $0 \leq x \leq 0.5$, $0 \leq y \leq 0.5$, $0 \leq x + y < 1$, $0 \leq z \leq 3$, $-0.5 \leq \alpha \leq 2$, and $\alpha - z < 2$ are satisfied and M is one or more elements selected from the group consisting of Mn, Fe, Cu, Ti, Mg, Al, Zn, Sn, Zr, Nb, Ga, W, Mo, B, and Si.)

[7] A method for producing a lithium metal composite oxide, including: a mixing step of mixing the metal composite compound according to any one of [1] to [6] and a lithium compound; and a calcining step of calcining an obtained mixture in an oxygen-containing atmosphere at a temperature of 500°C or higher and 1000°C or lower.

[8] A method for producing a metal composite compound, including: a slurry preparation step of supplying a first raw material element-containing aqueous solution containing Ni and a different element, a second raw material element-containing aqueous solution containing the different element, and an alkaline aqueous solution to a reaction vessel to obtain a coprecipitate-containing slurry; and a separation step of dewatering and drying the coprecipitate-containing slurry, in which, in the slurry preparation step, the first raw material element-containing aqueous solution and the second raw material element-containing aqueous solution are each supplied from different supply ports under a condition where a total flow rate of the first raw material element-containing aqueous solution is the largest, and when a total concentration of the different element in the first raw material element-containing aqueous solution is defined as S1 (unit: g/L), and a total concentration of the different element in the second raw material element-containing aqueous solution is defined as S2 (unit: g/L), S2/S1, which is a ratio of S2 to S1, satisfies $0.8 < S2/S1 \leq 210.0$.

[9] A method for producing a metal composite compound, including: a slurry preparation step of supplying a first raw material element-containing aqueous solution containing Ni and a different element, a second raw material element-containing aqueous solution containing the different element, and an alkaline aqueous solution to a reaction vessel to obtain a coprecipitate-containing slurry; and a separation step of dewatering and drying the coprecipitate-containing slurry, in which, in the slurry preparation step, the first raw material element-containing aqueous solution and the second raw material element-containing aqueous solution are each supplied from different supply ports under a condition where a total flow rate of the first raw material element-containing aqueous solution is the largest, and when a total concentration of the different element in the first raw material element-containing aqueous solution is defined as S1 (unit: g/L), and a total concentration of the different element in the second raw material element-containing aqueous solution is defined as S2 (unit: g/L), S2/S1, which is a ratio of S2 to S1, satisfies $0.8 < S2/S1 \leq 400.0$.

[10] The method for producing a metal composite compound according to [8] or [9], in which, in the slurry preparation step, when a total number of supply ports through which the first raw material element-containing aqueous solution is supplied to the reaction vessel is defined as N1, and a total number of supply ports through which a raw material element-containing aqueous solution other than the first raw material element-containing aqueous solution is supplied to the reaction vessel is defined as N2, $N1/N2 \geq 1.0$ is satisfied.

[11] The method for producing a metal composite compound according to any one of [8] to [10], in which, in the slurry preparation step, a flow rate of a liquid raw material that is supplied to the reaction vessel is adjusted to a condition where a residence time of a coprecipitate in the coprecipitate-containing slurry in the reaction vessel is 10.5 hours or shorter.

[Advantageous Effects of Invention]

According to the present invention, it is possible to provide a metal composite compound that is a raw material of a positive electrode active material enabling the production of a lithium secondary battery having a high initial efficiency, a method for producing a lithium metal composite oxide using the same, and a method for producing a metal composite compound.

[Brief Description of Drawings]

FIG. 1 is a schematic configuration view showing an example of a lithium secondary battery.
FIG. 2 is a schematic view showing an entire configuration of an all-solid-state lithium secondary battery.

[Description of Embodiments]

In the present specification, "high initial efficiency" means that the value of the initial efficiency measured by the following method is 85% or more.
In the present specification, a metal composite compound will be referred to as "MCC" below.
A lithium metal composite oxide will be referred to as "LiMO" below.
A positive electrode active material for a lithium secondary battery will be referred to as "CAM" below as an abbreviation for a cathode active material for a lithium secondary battery.
A notation "Ni" does not indicate a Ni metal element, but a Ni element unless particularly otherwise specified. This is also true for notations of other elements such as Co and Mn.
The initial efficiency of a lithium secondary battery is calculated by manufacturing the lithium secondary battery by the following method.

<Production of lithium metal composite oxide>

MCC and a lithium hydroxide monohydrate powder are weighed and mixed so that the mole ratio becomes Li/(Ni + Co + M) = 1.02, thereby obtaining a mixture. The obtained mixture is calcined at 740°C for 5 hours in an oxygen-containing atmosphere to obtain LiMO.

<Production of positive electrode for lithium secondary battery>

A paste-like positive electrode mixture is prepared by adding and kneading CAM composed of LiMO that is produced by the above-described method, a conductive material (acetylene black), and a binder (PVdF) in proportions at which the composition of CAM:conductive material:binder = 92:5:3 (mass ratio) is achieved. During the preparation of the positive electrode mixture, N-methyl-2-pyrrolidone is used as an organic solvent.
The obtained positive electrode mixture is applied to a 40 $\mu$m-thick Al foil, which is to serve as a current collector, and dried in a vacuum at 150°C for 8 hours, thereby obtaining a positive electrode for a lithium secondary battery. The electrode area of this positive electrode for the lithium secondary battery is set to 1.65 cm$^2$.

<Production of lithium secondary battery>

The following operation is performed in a glove box under an argon atmosphere.
The positive electrode for the lithium secondary battery that is produced in the section <Production of positive electrode for lithium secondary battery> is placed on the lower lid of a part for a coin-type battery R2032 (for example, manufactured by Hohsen Corp.) with an aluminum foil surface facing downward, and a separator (polyethylene porous film) is placed on the positive electrode for the lithium secondary battery. An electrolytic solution (300 $\mu$l) was poured thereinto. As the electrolytic solution, an electrolytic solution obtained by dissolving LiPF$_6$ in a liquid mixture of ethylene carbonate, dimethyl carbonate, and ethyl methyl carbonate in a volume ratio of 30:35:35 in a proportion of 1.0 mol/l is used.
Next, lithium metal is used as a negative electrode, and the negative electrode is placed on the upper side of a laminated film separator. An upper lid is placed through a gasket and caulked with a caulking machine, thereby producing a lithium secondary battery (coin-type half cell R2032).

<Charge and discharge test>

An initial efficiency test is performed by the following method using the lithium secondary battery produced by the above-described method, and the initial efficiency of the lithium secondary battery is calculated.

(Measurement method)

First, the lithium secondary battery that is produced as described above is left to stand at room temperature for 12 hours to sufficiently impregnate the separator and a positive electrode mixture layer with an electrolytic solution.

Next, at a testing temperature of 25°C, the set current value is set to 0.2CA for both charging and discharging, and each of constant-current constant-voltage charging and constant-current discharging is performed. The maximum charge voltage is set to 4.3V, and the minimum discharge voltage is set to 2.5V. The charge capacity is measured, and the obtained value is defined as the "initial charge capacity" (mAh/g). Furthermore, the discharge capacity is measured, and the obtained value is defined as the "initial discharge capacity" (mAh/g).

In addition, the initial efficiency is calculated by the following formula using the value of the initial discharge capacity and the value of the initial charge capacity.

$$\text{Initial efficiency (\%)} = \text{initial discharge capacity (mAh/g)/initial charge capacity (mAh/g)} \times 100$$

<Metal composite compound>

MCC of the present embodiment preferably contains at least Ni.

When MCC and a lithium compound are mixed and calcined, LiMO can be produced.

In one aspect of the present embodiment, MCC is composed of primary particles and secondary particles that are each an aggregate of the primary particles.

In one aspect of the present embodiment, MCC is a powder.

As MCC, oxides or hydroxides containing Ni or oxides or hydroxides containing Ni and one or more elements selected from the group consisting of Co and an element M are exemplary examples. As the element M, one or more elements selected from the group consisting of Mn, Fe, Cu, Ti, Mg, Al, Zn, Sn, Zr, Nb, Ga, W, Mo, B, and Si are exemplary examples.

«Relative standard deviation of crystallite size distribution of metal composite compound»

The above-described relative standard deviation is obtained by the following method.

First, powder X-ray diffraction measurement is performed on the powdery MCC with CuKa as a radiation source and a measurement range of a diffraction angle $2\theta$ set to 10° or more and 90° or less, and a diffraction peak within the range of $2\theta = 19 \pm 1°$ is obtained. As an X-ray diffractometer used for the powder X-ray diffraction measurement, for example, Ultima IV manufactured by Rigaku Corporation is an exemplary example.

The obtained diffraction peak is analyzed by analysis software, and a relative standard deviation of a volume-based crystallite size distribution is obtained.

As the analysis software, for example, integrated powder X-ray analysis software PDXL2 manufactured by Rigaku Corporation can be used.

The above-described relative standard deviation is 0.50 or more, preferably 0.60 or more, and more preferably 0.70 or more.

From the viewpoint of improving the initial efficiency of the lithium secondary battery, it is preferable that the crystals of LiMO that is used for CAM have sufficiently grown. In such CAM, the number of phases having lithium ion conductivity increases, and it is possible to improve the initial efficiency of the lithium secondary battery.

MCC in which the above-described relative standard deviation is the above-described lower limit value or more means that the width of the crystallite size distribution is wide. When such MCC and a lithium compound are mixed and calcined, in a process where MCC reacts with the lithium compound and LiMO is generated, MCC particles having a large crystallite size are preferentially calcined and grow while incorporating MCC particles having a small crystallite size, and thus LiMO crystals are likely to grow.

The relative standard deviation is preferably 1.50 or less, more preferably 1.40 or less, and still more preferably 1.30 or less.

The upper limit value and lower limit value of the relative standard deviations can be randomly combined together.

As examples of the combination, 0.50 or more and 1.50 or less, 0.60 or more and 1.40 or less, and 0.70 or more and 1.30 or less are exemplary examples.

<<Mode of crystallite size distribution of metal composite compound>>

The mode is obtained by analyzing the crystallite size distribution obtained by the above-described method with the above-described analysis software.

The mode is preferably 50 Å or more and more preferably 60 Å or more.

The mode is preferably 150 Å or less, more preferably 140 Å or less, and still more preferably 130 Å or less.

The upper limit value and lower limit value of the modes can be randomly combined together.

As examples of the combination, 50 Å or more and 150 Å or less, 60 Å or more and 140 Å or less, and 60 Å or more and 130 Å or less are exemplary examples.

MCC in which the mode is in the above-described range means that the width of the crystallite size distribution is wide and the crystallite sizes are large, that is, the abundance of MCC that is likely to react with the lithium compound is high. The use of such MCC makes it possible to sufficiently grow LiMO crystals. In CAM containing such LiMO, the number of phases having lithium ion conductivity increases, and it is possible to improve the initial efficiency of the lithium secondary battery.

<<Average crystallite size in crystallite size distribution of metal composite compound>>

The average crystallite size is obtained from the crystallite sizes in the volume-based crystallite size distribution obtained by the above-described method and the abundance of each crystallite size. Specifically, values obtained by multiplying the crystallite size and the abundance corresponding to each crystallite size are each calculated from the obtained crystallite size distribution, and the total thereof is defined as the average crystallite size.

The average crystallite size is preferably 120 Å or more, more preferably 140 Å or more, and still more preferably 160 Å or more.

The average crystallite size is preferably 300 Å or less, more preferably 280 Å or less, and still more preferably 260 Å or less.

The upper limit and the lower limit of the average crystallite sizes can be randomly combined together.

As examples of the combination of the upper limit value and the lower limit value, 120 Å or more and 300 Å or less, 140 Å or more and 280 Å or less, and 160 Å or more and 260 Å or less are exemplary examples.

MCC in which the average crystallite size is in the above-described range means that the width of the crystallite size distribution is large and the crystallite sizes are large, that is, the abundance of MCC that is likely to react with the lithium compound is high. The use of such MCC makes it possible to sufficiently grow LiMO particles. In CAM containing such LiMO, the number of phases having lithium ion conductivity increases, and it is possible to improve the initial efficiency of the lithium secondary battery.

<<Mode/average crystallite size>>

In MCC, the value of the mode/average crystallite size is preferably 0.55 or less, more preferably 0.54 or less, and still more preferably 0.53 or less. In addition, in MCC, the value of the mode/average crystallite size may be 0.57 or less or 0.56 or less.

The mode/average crystallite size is the ratio of the mode value to the average crystallite size.

The mode/average crystallite size is preferably 0.10 or more, more preferably 0.15 or more, and still more preferably 0.20 or more.

The upper limit value and lower limit value of the mode/average crystallite size can be randomly combined together.

As examples of the combination, 0.10 or more and 0.55 or less, 0.15 or more and 0.54 or less, and 0.20 or more and 0.53 or less are exemplary examples. In addition, as examples of the combination, 0.10 or more and 0.57 or less and 0.15 or more and 0.56 or less are exemplary examples.

In MCC in which the mode/average crystallite size is in the above-described range, the crystallite size distribution is likely to be wide on a side where the crystallite sizes are large. In this case, the abundance of MCC having a large crystallite size, that is, being likely to react with the lithium compound is high. The use of such MCC makes it possible to sufficiently grow LiMO particles. In CAM containing such LiMO, the number of phases having lithium ion conductivity increases, and it is possible to improve the initial efficiency of the lithium secondary battery.

<<d90 - d10>>

MCC preferably satisfies Formula (A) below.

$$80 \text{ Å} \leq d90 - d10 \cdots \text{ Formula (A)}$$

<<Method for measuring d90 and d10>>

In Formula (A), d10 and d90 are obtained by the following method.

First, the volume-based crystallite size distribution of MCC is obtained by the above-described method. Next, a crystallite size distribution function curve in which the horizontal axis is the obtained volume-based crystallite size and the vertical axis is the probability density function of the crystallite with respect to the crystallite size is created.

In the obtained crystallite size distribution function curve, the crystallite size (Å) at which the area proportion from the small size side is 10% with respect to the total area of a region surrounded by the crystallite size distribution function curve and the horizontal axis is defined as d10. In addition, the crystallite size (Å) at which the area proportion from the small size side is 90% with respect to the total area is defined as d90.

In MCC, d90 - d10 is more preferably 90 Å or more and still more preferably 100 Å or more.

In MCC, d90 - d10 is preferably 450 Å or less, more preferably 400 Å or less, and still more preferably 380 Å or less.

The upper limit value and lower limit value of d90 - d10 can be randomly combined together.

As examples of the combination of the upper limit value and the lower limit value, 80 Å or more and 450 Å or less, 90 Å or more and 400 Å or less, and 100 Å or more and 380 Å or less are exemplary examples.

When d90 - d10 of MCC is in the above-described range, it means that the width of the crystallite size distribution is wide and a certain number or more of particles having a small crystallite size are present. Such MCC is likely to be incorporated into MCC particles having a large crystallite size during a reaction with the lithium compound. As a result, LiMO crystals are likely to grow.

<<Composition formula>>

MCC is preferably a compound represented by Composition Formula (I) below.

$$Ni_{1-x-y}Co_xM_yO_z(OH)_{2-\alpha} \ldots \qquad \text{Formula (I)}$$

(In Composition Formula (I), $0 \leq x \leq 0.5$, $0 \leq y \leq 0.5$, $0 \leq x + y < 1, 0 \leq z \leq 3$, $-0.5 \leq \alpha \leq 2$, and $\alpha - z < 2$ are satisfied and M is one or more elements selected from the group consisting of Mn, Fe, Cu, Ti, Mg, Al, Zn, Sn, Zr, Nb, Ga, W, Mo, B, and Si.)

MCC is preferably a hydroxide having Composition Formula (I)-1 below.

$$Ni_{1-x-y}Co_xM_y(OH)_{2-\alpha} \ldots \qquad \text{Formula (I)-1}$$

(In Composition Formula (I)-1, $0 \leq x \leq 0.5$, $0 \leq y \leq 0.5$, $0 \leq x + y < 1$, and $-0.5 \leq \alpha < 2$ are satisfied and M is one or more elements selected from the group consisting of Mn, Fe, Cu, Ti, Mg, Al, Zn, Sn, Zr, Nb, Ga, W, Mo, B, and Si.)

(x)

x is preferably 0.01 or more, more preferably 0.02 or more, and particularly preferably 0.03 or more.

In addition, x is preferably 0.44 or less, more preferably 0.42 or less, and particularly preferably 0.40 or less.

The upper limit value and lower limit value of x can be randomly combined together.

Composition Formula (I) or Composition Formula (I)-1 preferably satisfies $0.01 \leq x \leq 0.44$, more preferably satisfies $0.02 \leq x \leq 0.42$, and particularly preferably satisfies $0.03 \leq x \leq 0.40$.

(Y)

y is preferably 0.01 or more, more preferably 0.02 or more, and particularly preferably 0.03 or more.

In addition, y is preferably 0.44 or less, more preferably 0.42 or less, and particularly preferably 0.40 or less.

The upper limit value and lower limit value of y can be randomly combined together.

Composition Formula (I) or Composition Formula (I)-1 preferably satisfies $0.01 \leq y \leq 0.44$, more preferably satisfies $0.02 \leq y \leq 0.42$, and particularly preferably satisfies $0.03 \leq y \leq 0.40$.

(z)

z is preferably 0.02 or more, more preferably 0.03 or more, and particularly preferably 0.05 or more.

z is preferably 2.8 or less, more preferably 2.6 or less, and particularly preferably 2.4 or less.

The upper limit value and the lower limit value can be randomly combined together.

Composition Formula (I) preferably satisfies $0 \leq z \leq 2.8$, more preferably $0.02 \leq z \leq 2.8$, still more preferably satisfies $0.03 \leq z \leq 2.6$, and particularly preferably satisfies $0.05 \leq z \leq 2.4$.

(α)

α is preferably -0.45 or more, more preferably -0.40 or more, and particularly preferably -0.35 or more.

α is preferably 1.8 or less, more preferably 1.6 or less, and particularly preferably 1.4 or less. The upper limit value and the lower limit value can be randomly combined together.

Composition Formula (I) or Composition Formula (I)-1 preferably satisfies $-0.45 \leq \alpha \leq 1.8$, more preferably $-0.40 \leq \alpha \leq 1.6$, and particularly preferably $-0.35 \leq \alpha \leq 1.4$.

In the present embodiment, Composition Formula (I) or Composition Formula (I)-1 preferably satisfies $0.01 \leq x \leq 0.44$, $0.01 \leq y \leq 0.44$, $0 \leq z \leq 2.8$, and $-0.45 \leq \alpha \leq 1.8$.

<<Composition analysis of MCC>>

The composition analysis of MCC can be measured using an ICP emission spectrometer after dissolving the powder of the obtained MCC in hydrochloric acid.

As the ICP emission spectrometer, for example, Optima 8300 manufactured by Perkin Elmer Inc. can be used.

Examples of preferable MCC will be described below.

- (Example 1) In MCC, the relative standard deviation is 0.50 or more, and the mode is 50 Å or more.
- (Example 2) In MCC, the relative standard deviation is 0.50 or more, the mode is 50 Å or more, and Composition Formula (I) is satisfied.
- (Example 3) In MCC, the relative standard deviation is 0.50 or more, and the average crystallite size is 120 Å or more.
- (Example 4) In MCC, the relative standard deviation is 0.50 or more, the average crystallite size is 120 Å or more, and Composition Formula (I) is satisfied.

In MCC of (Example 1) to (Example 4), the crystallite size distribution is likely to be wide on the side where the crystallite sizes are large. In this case, the abundance of MCC having a large crystallite size, that is, being likely to react with the lithium compound is high. The use of MCC of (Example 1) to (Example 4) makes it possible to sufficiently grow LiMO particles. CAM containing such LiMO makes it possible to improve the initial efficiency of the lithium secondary battery.

<Method 1 for producing metal composite compound>

A method for producing MCC of the present embodiment includes a slurry preparation step and a separation step in this order.

The slurry preparation step is a step of supplying a first raw material element-containing aqueous solution containing Ni and a different element, a second raw material element-containing aqueous solution containing the different element, and an alkaline aqueous solution to a reaction vessel to obtain a coprecipitate-containing slurry.

The different element refers to an element other than Ni, and examples thereof include one or more elements selected from the group consisting of Co and an element M. The element M is one or more elements selected from the group consisting of Mn, Fe, Cu, Ti, Mg, Al, Zn, Sn, Zr, Nb, Ga, W, Mo, B, and Si.

The separation step is a step of dewatering and drying the coprecipitate-containing slurry obtained in the slurry preparation step to separate MCC.

[Slurry preparation step]

In the slurry preparation step, the first raw material element-containing aqueous solution and the second raw material element-containing aqueous solution are each supplied into the reaction vessel from a different supply port. At this time, the first raw material element-containing aqueous solution and the second raw material element-containing aqueous solution are supplied under a condition where the total flow rate of the first raw material element-containing aqueous solution is the largest among the raw material element-containing aqueous solutions that are supplied to the reaction vessel.

In other words, among the raw material element-containing aqueous solutions that are supplied to the reaction vessel, a raw material element-containing aqueous solution having the largest total flow rate is defined as the first raw material element-containing aqueous solution. The second raw material element-containing aqueous solution is a raw material element-containing aqueous solution having the second largest flow rate after the first raw material element-containing aqueous solution.

The first raw material element-containing aqueous solution and the second raw material element-containing aqueous solution may contain the same element or may contain different elements.

The same raw material element-containing aqueous solution may be supplied to the inside of the reaction vessel from a plurality of supply ports by branching the pipe. In that case, the total value of the flow rates of the raw material element-containing aqueous solutions that are supplied from each supply port is defined as the total flow rate of the raw material element-containing aqueous solution.

For example, in a case where the second raw material element-containing aqueous solution is supplied to the reaction vessel from two supply ports (a supply port 1 and a supply port 2), the total rate of the flow rate of the second raw material element-containing aqueous solution in the supply port 1 and the flow rate of the second raw material element-containing aqueous solution in the supply port 2 becomes the total flow rate of the second raw material element-containing aqueous solution. This is also true for the first raw material element-containing aqueous solution.

In the slurry preparation step, each raw material element-containing aqueous solution is supplied under a condition where the total flow rate of the first raw material element-containing aqueous solution is the largest when the total flow rates of the individual raw material element-containing aqueous solutions are compared. When Ni and the different element are contained in the first raw material element-containing aqueous solution having the largest total flow rate, the nucleation rate becomes slow, the nucleation rates of coprecipitates are likely to be different, and the growth rates of the crystallite sizes are likely to be different. Under this condition, in MCC to be produced, the width of the crystallite distribution is likely to become wide, and MCC for which the relative standard deviation, mode, average crystallite size, and d90 - d10 of the crystallite size distribution are within the ranges of the present embodiment can be obtained.

When the total concentration of the different element in the first raw material element-containing aqueous solution is defined as S1 (unit: g/L), and the total concentration of the different element in the second raw material element-containing aqueous solution is defined as S2 (unit: g/L), S2/S1, which is the ratio of S2 to S1, satisfies $0.8 < S2/S1 \leq 210.0$.

S2/S1 is preferably 1.0 or more and more preferably 1.5 or more. S2/S1 is preferably 100.0 or less, more preferably 25.0 or less, and particularly preferably 6.0 or less. The upper limit value and the lower limit value can be randomly combined together.

S2/S1 preferably satisfies $1.0 \leq S2/S1 \leq 100.0$, more preferably satisfies $1.0 \leq S2/S1 \leq 25.0$, and particularly preferably satisfies $1.5 \leq S2/S1 \leq 6.0$.

In addition, in the slurry preparation step, a plurality of kinds of raw material element-containing aqueous solutions other than the first raw material element-containing aqueous solution and the second raw material element-containing aqueous solution may be used.

In a case where a plurality of kinds of raw material element-containing aqueous solutions are used, the ratio between the total concentration of a different element in each raw material element-containing aqueous solution and the total concentration of the different element in the first raw material element-containing aqueous solution in each raw material element-containing aqueous solution is preferably more than 0.8 and 210.0 or less.

For example, in a case where, as the raw material element-containing aqueous solutions to be supplied to the reaction vessel, a third raw material element-containing aqueous solution and a fourth raw material element-containing aqueous solution are used in addition to the first raw material element-containing aqueous solution and the second raw material element-containing aqueous solution, the total concentration of a different element in the third raw material element-containing aqueous solution is defined as S3 (unit: g/L), and the total concentration of a different element in the fourth raw material element-containing aqueous solution is defined as S4 (unit: g/L). In this case, it is preferable that, in addition to the S2/S1 value, S3/S1 and S4/S1 values are more than 0.8 and 210.0 or less.

An example of the total concentration of the different element that is contained in the first raw material element-containing aqueous solution is more than 0 g/L and 100.0 g/L or less.

An example of the total concentration of the different element that is contained in the second raw material element-containing aqueous solution, the third raw material element-containing aqueous solution, or the fourth raw material element-containing aqueous solution is 0.5 g/L or more and 300.0 g/L or less.

When raw material element-containing aqueous solutions having an S2/S1 in the above-described range are supplied, it is possible to make the nucleation rates of coprecipitates different between a region where the second raw material element-containing aqueous solution has been dropped and a region where the first raw material element-containing aqueous solution has been dropped. Specifically, the nuclei of coprecipitates are generated faster in the region where the second raw material element-containing aqueous solution has been dropped than in the region where the first raw material element-containing aqueous solution has been dropped.

When a metal raw material is further supplied to generated nuclei, the growth of crystallites proceeds. While the growth of crystallites proceeds, the nucleation rates make the growth rates of the crystallite sizes different. Under this condition, in MCC to be produced, the width of the crystallite distribution is likely to become wide, and MCC for which the relative standard deviation, mode, average crystallite size, and d90 - d10 of the crystallite size distribution are within the ranges of the present embodiment can be obtained.

Furthermore, in the slurry adjustment step, it is preferable to satisfy $N1/N2 \geq 1.0$.

Here, N1 is the total number (unit: locations) of supply ports vessel through which the first raw material element-containing aqueous solution is supplied in the reaction, and N2 is the total number (unit: locations) of supply ports through which raw material element-containing aqueous solutions other than the first raw material element-containing aqueous solution are supplied. The raw material element-containing aqueous solutions other than the first raw material element-containing aqueous solution refer to, for example, the second raw material element-containing aqueous solution, the third raw material element-containing aqueous solution, the fourth raw material element-containing aqueous solution, and the like.

For example, in a case when the first raw material element-containing aqueous solution is supplied to the reaction vessel separately from four supply ports, N1 is 4 locations, and, in a case where the second raw material element-containing aqueous solution is supplied from two supply ports and the third raw material element-containing aqueous solution is supplied from three supply ports to the reaction vessel, N2 is 5 locations.

$N1/N2 \geq 1.5$ is more preferably satisfied, $N1/N2 \geq 2.0$ is still more preferably satisfied, and $N1/N2 \geq 2.5$ is particularly preferably satisfied.

In a case where N1/N2 is less than 1.0, the first raw material element-containing aqueous solution is less likely to disperse when the first raw material element-containing aqueous solution has been supplied to the reaction vessel, and it becomes difficult to obtain MCC having desired crystallinity.

In the slurry preparation step, it is preferable to adjust the flow rate of a liquid raw material that is supplied to the reaction vessel under a condition where the residence time of coprecipitates in the coprecipitate-containing slurry in the reaction vessel is 10.5 hours or shorter.

Here, the liquid raw material is each aqueous solution that is supplied to the reaction vessel and refers to, for example, the first raw material element-containing aqueous solution, the second raw material element-containing aqueous solution, the alkaline aqueous solution, a complexing agent, or the like.

The residence time more preferably satisfies 10.0 hours or shorter and more preferably satisfies 9.0 hours or shorter.

Here, the residence time means the average time for the nuclei of coprecipitates generated at a certain point in time to reside in the reaction vessel until discharged to the outside of the reaction vessel together with the coprecipitate-containing slurry in the reaction vessel due to a liquid raw material newly supplied to the reaction vessel. Specifically, the residence time is a value calculated by the following formula. Residence time (hours) = volume of reaction vessel (L)/total flow rate of liquid raw material that is supplied (L/h)

When the residence time is the above-described upper limit value or shorter, the amount of MCC to be obtained per unit time is large, and the production efficiency is likely to increase.

The residence time is preferably 2.0 hours or longer, more preferably 3.0 hours or longer, and still more preferably 4.0 hours or longer.

As the residence time, 2.0 hours or longer and 10.5 hours or shorter, 2.0 hours or longer and 10.0 hours or shorter, 3.0 hours or longer and 9.0 hours or shorter, and 4.0 hours or longer and 9.0 hours or shorter are exemplary examples.

In a case where the residence time exceeds the lower limit value, the generated MCC can sufficiently grow and is likely to satisfy desired crystallinity.

Other production method conditions in the slurry preparation step will be described below in detail using a metal composite hydroxide containing Ni, Co, and Al as an example.

The slurry preparation step can be performed by a known batch-type coprecipitation method or continuous coprecipitation method.

Specifically, a nickel salt solution, a cobalt salt solution, an aluminum salt solution, as the raw material element-containing aqueous solutions, and a complexing agent are reacted by the continuous coprecipitation method described in JP-A-2002-201028, thereby producing a hydroxide represented by $Ni_{(1-x-y)}Co_xAl_y(OH)_2$ (in the formula, $0 < x \leq 0.5$, $0 < y \leq 0.5$, and $0 \leq x + y < 1$).

A nickel salt that is a solute of the nickel salt solution is not particularly limited, and, for example, at least one of nickel sulfate, nickel nitrate, nickel chloride, and nickel acetate can be used.

As a cobalt salt that is a solute of the cobalt salt solution, for example, at least one of cobalt sulfate, cobalt nitrate, cobalt chloride, and cobalt acetate can be used.

As an aluminum salt which is a solute of the aluminum salt solution, for example, at least one of aluminum sulfate, aluminum nitrate, and aluminum chloride can be used.

The above-described raw material element-containing aqueous solutions are used in proportions corresponding to the composition ratio of $Ni_{(1-x-y)}Co_xAl_y(OH)_2$. That is, the amount of each metal salt is specified in a proportion at which the mole ratio of Ni, Co, and Al as a result of mixing the raw material element-containing aqueous solutions corresponds to (1 - x - y):x:y in Composition Formula (I) of MCC. In addition, as the solvent, water is used.

The complexing agent is capable of forming a complex with a nickel ion, a cobalt ion, and an aluminum ion in an aqueous solution, and examples thereof include ammonium ion donors, hydrazine, ethylenediaminetetraacetic acid, nitrilotriacetic acid, uracildiacetic acid, and glycine. The ammonium ion donors are, for example, ammonium hydroxide, ammonium sulfate, ammonium chloride, ammonium carbonate, ammonium fluoride, and the like.

In the production steps of MCC, regarding the amount of the complexing agent that is contained in the liquid mixture containing the nickel salt solution, the cobalt salt solution, the aluminum salt solution, and the complexing agent, for example, the mole ratio of the complexing agent to the sum of the mole numbers of the metal salts (a nickel salt, a cobalt salt and an aluminum salt) is more than 0 and 2.0 or less.

In the coprecipitation method, in order to adjust the pH value of the liquid mixture containing the nickel salt solution, the cobalt salt solution, the aluminum salt solution, and the complexing agent, an alkali metal hydroxide is added to the liquid mixture before the pH of the liquid mixture turns from alkaline into neutral. The alkali metal hydroxide is, for example, sodium hydroxide or potassium hydroxide.

A continuous reaction vessel is preferably used in the coprecipitation method. MCC that is obtained by the continuous coprecipitation method contains both particles having small crystallites and particles having large crystallites, and the crystallite size distribution of MCC is likely to increase.

As the reaction vessel that is used in the continuous coprecipitation method, it is possible to use a type of reaction vessel in which the formed reaction precipitate is caused to overflow for separation.

In addition, during the reaction, the pH value in the reaction vessel is controlled, for example, within a range of pH 9 or more and pH 13 or less. When the pH value is within the above-described range, the crystals of MCC to be obtained are likely to grow, and MCC for which the mode, average crystallite size, and d90 - d10 of the crystallite size distribution are within the ranges of the present embodiment can be obtained.

The value of pH in the present specification is defined as a value measured when the temperature of the solution, which is the measurement subject, is 40°C. The pH of the solution, which is the measurement subject, is measured when the temperature of the solution sampled from the reaction vessel has reached 40°C.

In a case where the temperature of the sampled solution is lower than 40°C, the pH is measured when the solution has been heated to reach 40°C.

In a case where the temperature of the sampled solution is higher than 40°C, the pH is measured when the solution has been cooled to reach 40°C.

At the time of the reaction, the solution temperature in the reaction vessel is controlled in a range of, for example, 20°C or higher and 80°C or lower and preferably 30°C or higher and 75°C or lower.

A coprecipitate-containing slurry is obtained by the slurry preparation step.

[Separation step]

After the above-described reaction, the coprecipitate-containing slurry is dewatered and then dried, whereby MCC is obtained. In the above-described example, a nickel-cobalt-aluminum metal composite hydroxide is obtained as MCC. In addition, in a case where impurities derived from the raw material element-containing aqueous solutions remain when the coprecipitates are washed with only water, the coprecipitates may be washed with a weak acid water, sodium hydroxide, or an alkaline solution containing potassium hydroxide as necessary.

In the above-described example, the nickel-cobalt-aluminum metal composite hydroxide is produced as MCC, but a nickel-cobalt-aluminum metal composite oxide may be prepared.

For example, a nickel-cobalt-aluminum metal composite oxide can be prepared by oxidizing a nickel-cobalt-aluminum metal composite hydroxide. Regarding the calcining time for oxidation, the total time taken while the temperature begins to be raised and reaches the highest holding temperature and the holding of the metal composite hydroxide at the highest holding temperature ends is preferably set to 1 hour or longer and 30 hours or shorter. The highest holding temperature is preferably 350°C or higher and 800°C or lower and more preferably 400°C or higher and 700°C or lower.

The highest holding temperature in the present specification is the highest temperature of the holding temperature of the atmosphere in a calcining furnace in a calcining step and means the calcining temperature in the calcining step. In the case of a main calcining step having a plurality of heating steps, the highest holding temperature means the highest temperature in each heating step.

The temperature rising rate in the present specification is calculated from the time taken while the temperature begins to be raised and reaches the highest holding temperature in a calcining device and a temperature difference between the temperature in the calcining furnace of the calcining device at the time of beginning to raise the temperature and the highest holding temperature.

<Method 2 for producing metal composite compound>

A method 2 for producing a metal composite compound is the same as the section <Method 1 for producing metal composite compound> except that S2/S1 satisfies 0.8 < S2/S1 ≤ 400.0.

In the method 2 for producing a metal composite compound, S2/S1 is preferably 1.0 or more and more preferably 1.5 or more. S2/S1 is preferably 390.0 or less, more preferably 385.0 or less, and particularly preferably 380.0 or less. The upper limit value and the lower limit value can be randomly combined together.

S2/S1 preferably satisfies $1.0 \leq S2/S1 \leq 390.0$, more preferably satisfies $1.0 \leq S2/S1 \leq 385.0$, and particularly preferably satisfies $1.5 \leq S2/S1 \leq 380.0$.

When S2/S1 is within the above-described range, particularly, the above-described upper limit value or less, MCC for which the width of the crystallite size distribution is wide on the side where the average crystallite size is large is likely to be obtained compared with otherwise cases with the same composition.

<Method for producing lithium metal composite oxide>

A method for producing LiMO of the present embodiment has a mixing step of mixing MCC and a lithium compound and a calcining step of calcining an obtained mixture in an oxygen-containing atmosphere at a temperature of 500°C or higher and 1000°C or lower.

In the method for producing LiMO, the above-described MCC of the present embodiment is used. MCC is produced by the method described in the <Method for producing a metal composite compounds

[Mixing step]

MCC and a lithium compound are mixed together.

As the lithium compound, one or more selected from the group consisting of lithium carbonate, lithium hydroxide, and lithium hydroxide monohydrate can be used.

The lithium compound and MCC are mixed in consideration of the composition ratio of a final target product, and a mixture of the lithium compound and MCC is obtained.

[Calcining step]

The obtained mixture is calcined at a calcining temperature of 500°C or higher and 1000°C or lower in an oxygen-containing atmosphere. The mixture is calcined, whereby LiMO crystals grow.

The calcining temperature in the present specification is the temperature of the atmosphere in the calcining furnace and means the highest temperature of the holding temperatures (highest holding temperature).

In a case where the main calcining step has a plurality of heating steps, the calcining temperature in each heating step means the temperature at the time of heating at the highest holding temperature.

Specifically, the holding temperature is preferably 550°C or higher and 980°C or lower and is preferably 600°C or higher and 960°C or lower.

In addition, as the time during which the mixture is held at the holding temperature, 0.1 hour or longer and 20 hours or shorter is an exemplary example, and 0.5 hours or longer and 10 hours or shorter is preferable.

In addition, the mixture is preferably calcined in an oxygen-containing atmosphere. Specifically, it is preferable to introduce an oxygen gas to create an oxygen-containing atmosphere in the calcining furnace.

The temperature rising rate is calculated from the time taken while the temperature begins to be raised and reaches the highest holding temperature in a calcining device and a temperature difference between the temperature in the calcining furnace of the calcining device at the time of beginning to raise the temperature and the highest holding temperature.

After the calcining step, a calcined product obtained by calcining is appropriately pulverized and sieved, whereby LiMO is obtained.

<Lithium secondary battery>

Next, the configuration of a lithium secondary battery that is suitable in a case where LiMO of the present embodiment is used as CAM will be described.

Furthermore, a positive electrode for a lithium secondary battery that is suitable in a case where LiMO of the present embodiment is used as CAM (hereinafter, referred to as the positive electrode in some cases) will be described.

Furthermore, a lithium secondary battery that is suitable for an application of a positive electrode will be described.

An example of the lithium secondary battery that is suitable in a case where LiMO of the present embodiment is used as CAM has a positive electrode, a negative electrode, a separator interposed between the positive electrode and the negative electrode, and an electrolytic solution disposed between the positive electrode and the negative electrode.

An example of the lithium secondary battery has a positive electrode, a negative electrode, a separator interposed between the positive electrode and the negative electrode, and an electrolytic solution disposed between the positive electrode and the negative electrode.

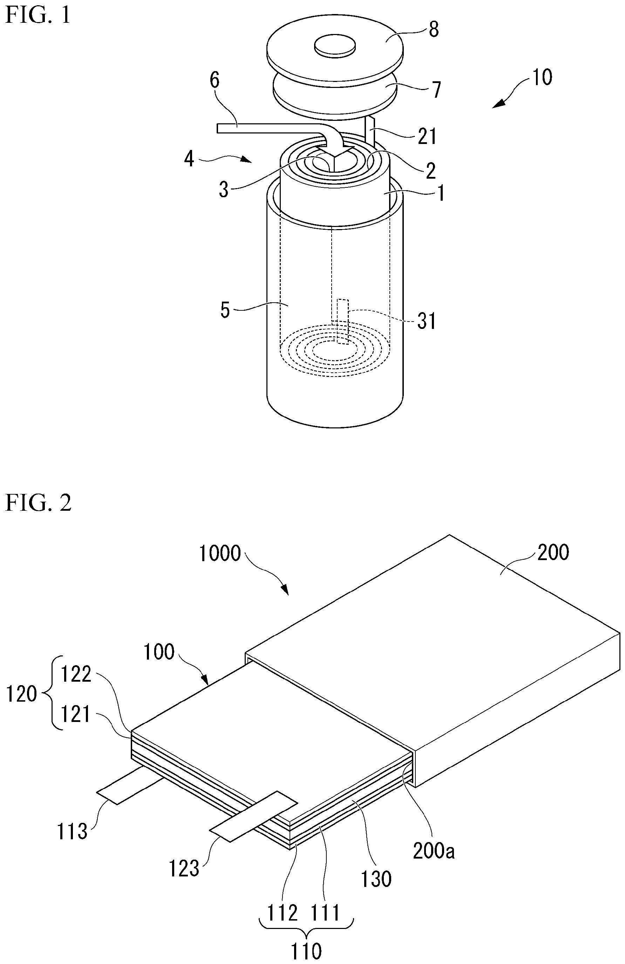

FIG. 1 is a schematic view showing an example of a lithium secondary battery. A cylindrical lithium secondary battery 10 of the present embodiment is produced as described below.

First, as shown in FIG. 1, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 and are wound to form an electrode group 4.

Next, the electrode group 4 and an insulator, not shown, are accommodated in a battery can 5, and then the can bottom is sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. For example, shapes such as a cylindrical shape or a square shape can be exemplary examples.

Furthermore, the lithium secondary battery is not limited to the winding-type configuration and may have a laminate-type configuration in which the laminated structure of the positive electrode, the separator, the negative electrode, and the separator is repeatedly overlaid. As the laminate-type lithium secondary battery, a so-called coin-type battery, button-type battery, or paper-type (or sheet-type) battery can be an exemplary example.

Hereinafter, each configuration will be described in order.

(Positive electrode)

The positive electrode can be produced by, first, preparing a positive electrode mixture containing CAM, a conductive material, and a binder and supporting the positive electrode mixture by a positive electrode current collector.

(Conductive material)

As the conductive material in the positive electrode, a carbon material can be used. As the carbon material, graphite powder, carbon black (for example, acetylene black), a fibrous carbon material, and the like can be exemplary examples.

The proportion of the conductive material in the positive electrode mixture is preferably 5 to 20 parts by mass with respect to 100 parts by mass of CAM.

(Binder)

As the binder in the positive electrode, a thermoplastic resin can be used. As the thermoplastic resin, polyimide resins; fluororesins such as polyvinylidene fluoride (hereinafter, referred to as PVdF in some cases) and polytetrafluoroethylene; polyolefin resins such as polyethylene and polypropylene, and the resins described in WO 2019/098384A1 or US2020/0274158A1 can be exemplary examples.

(Positive electrode current collector)

As the positive electrode current collector in the positive electrode, a strip-shaped member formed of a metal material such as Al, Ni, or stainless steel as a forming material can be used.

As a method for supporting the positive electrode mixture by the positive electrode current collector, a method in which a paste of the positive electrode mixture is prepared using an organic solvent, the paste of the positive electrode mixture to be obtained is applied to and dried on at least one surface side of the positive electrode current collector, and the positive electrode mixture is fixed by performing an electrode pressing step is an exemplary example.

As the organic solvent that can be used in a case where the paste of the positive electrode mixture is prepared, N-methyl-2-pyrrolidone (hereinafter, referred to as NMP in some cases) is an exemplary example.

As the method for applying the paste of the positive electrode mixture to the positive electrode current collector, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and which can be doped with lithium ions and from which lithium ions can be de-doped at a potential lower than that of the positive electrode are exemplary examples.

As the carbon material that can be used as the negative electrode active material, graphite such as natural graphite or artificial graphite, cokes, carbon black, a carbon fiber, and an organic polymer compound-calcined body can be exemplary examples.

As oxides that can be used as the negative electrode active material, oxides of silicon represented by a formula $SiO_x$ (here, x is a positive real number) such as $SiO_2$ and $SiO$; oxides of tin represented by a formula $SnO_x$ (here, x is a positive real number) such as $SnO_2$ and $SnO$; and metal composite oxides containing lithium and titanium such as $Li_4Ti_5O_{12}$ and $LiVO_2$ can be exemplary examples.

In addition, as the metal that can be used as the negative electrode active material, lithium metal, silicon metal, tin metal, and the like can be exemplary examples. As a material that can be used as the negative electrode active material, the materials described in WO 2019/098384A1 or US2020/0274158A1 may be used.

These metals and alloys can be used as an electrode, mainly, singly after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from an uncharged state to a fully-charged state during charging, the average discharging potential is low, the capacity retention rate when repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose (hereinafter, referred to as CMC in some cases), styrene-butadiene rubber (hereinafter, referred to as SBR in some cases), polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example.

As a method for supporting the negative electrode mixture by the negative electrode current collector, similar to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

(Electrolytic solution)

The electrolytic solution in the lithium secondary battery contains an electrolyte and an organic solvent.

As the electrolyte that is contained in the electrolytic solution, lithium salts such as $LiClO_4$ and $LiPF_6$ are exemplary examples, and a mixture of two or more thereof may be used.

In addition, as the organic solvent that is contained in the electrolytic solution, for example, carbonates such as propylene carbonate, ethylene carbonate, dimethyl carbonate, diethyl carbonate, and ethyl methyl carbonate can be used.

As the organic solvent, two or more of the above-described organic solvents are preferably used in a mixture form. Among these, a solvent mixture containing a carbonate is preferable, and a solvent mixture of a cyclic carbonate and a non-cyclic carbonate and a solvent mixture of a cyclic carbonate and an ether are more preferable.

In addition, as the electrolytic solution, it is preferable to use an electrolytic solution containing a lithium salt containing fluorine such as $LiPF_6$ and an organic solvent having a fluorine substituent since the safety of lithium secondary batteries to be obtained is enhanced. As the electrolyte and the organic solvent that are contained in the electrolytic solution, the electrolytes and the organic solvents described in WO2019/098384A1 or US2020/0274158A1 may be used.

<All-solid-state lithium secondary battery>

Next, a positive electrode for which LiMO according to an aspect of the present invention is used as CAM for an all-solid-state lithium secondary battery and an all-solid-state lithium secondary battery having this positive electrode will be described while describing the configuration of the all-solid-state lithium secondary battery.

FIG. 2 is a schematic view showing an example of an all-solid-state lithium secondary battery of the present embodiment. An all-solid-state lithium secondary battery 1000 shown in FIG. 2 has a laminate 100 having a positive electrode 110, a negative electrode 120, and a solid electrolyte layer 130 and an exterior body 200 accommodating the laminate 100. In addition, the all-solid-state lithium secondary battery 1000 may have a bipolar structure in which CAM and a negative electrode active material are disposed on both sides of a current collector. As specific examples of the bipolar structure, for example, the structures described in JP-A-2004-95400 are exemplary examples. A material that configures each member will be described below.

The laminate 100 may have an external terminal 113 that is connected to a positive electrode current collector 112 and an external terminal 123 that is connected to a negative electrode current collector 122. In addition, the all-solid-state lithium secondary battery 1000 may have a separator between the positive electrode 110 and the negative electrode 120.

The all-solid-state lithium secondary battery 1000 further has an insulator, not shown, that insulates the laminate 100 and the exterior body 200 from each other and a sealant, not shown, that seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been performed into a bag shape can also be used.

As the shape of the all-solid-state lithium secondary battery 1000, for example, shapes such as a coin type, a button type, a paper type (or a sheet type), a cylindrical type, a square type, and a laminate type (pouch type) can be exemplary examples.

As an example of the all-solid-state lithium secondary battery 1000, a form in which one laminate 100 is provided is shown in the drawings, but the present embodiment is not limited thereto. The all-solid-state lithium secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 has a positive electrode active material layer 111 and a positive electrode current collector 112.

The positive electrode active material layer 111 contains LiMO, which is one aspect of the present invention described above, and a solid electrolyte. In addition, the positive electrode active material layer 111 may contain a conductive material and a binder.

(Solid electrolyte)

As the solid electrolyte that is contained in the positive electrode active material layer 111 of the present embodiment, a solid electrolyte that has lithium ion conductivity and used in well-known all-solid-state lithium secondary batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples. As each electrolyte, the compounds described in WO 2020/208872A1, US2016/0233510A1, US2012/0251871A1, and US2018/0159169A1 are exemplary examples, and examples thereof include the following compounds.

(Oxide-based solid electrolyte)

As the oxide-based solid electrolyte, for example, a perovskite-type oxide, a NASICON-type oxide, a LISICON-type oxide, a garnet-type oxide, and the like are exemplary examples. Specific examples of each oxide include the compounds described in WO 2020/208872A1, US2016/0233510A1, and US2020/0259213A1, and, for example, the following compounds are exemplary examples.

As the perovskite-type oxide, Li-La-Ti-based oxides such as $Li_aLa_{1-a}TiO_3$ ($0 < a < 1$), Li-La-Ta-based oxides such as $Li_bLa_{1-b}TaO_3$ ($0 < b < 1$), Li-La-Nb-based oxides such as $Li_cLa_{1-c}NbO_3$ ($0 < c < 1$), and the like are exemplary examples.

As the NASICON-type oxide, $Li_{1+d}Al_dTi_{2-d}(PO_4)_3$ ($0 < d < 1$) and the like are exemplary examples. The NASICON-type oxide is an oxide represented by $Li_mM^1_nM^2_oP_pO_q$ (in the formula, $M^1$ is one or more elements selected from the group consisting of B, Al, Ga, In, C, Si, Ge, Sn, Sb, and Se. $M^2$ is one or more elements selected from the group consisting of Ti, Zr, Ge, In, Ga, Sn, and Al. m, n, o, p, and q are random positive numbers).

As the LISICON-type oxide, oxides represented by $Li_4M^3O_4$-$Li_3M^4O_4$ ($M^3$ is one or more elements selected from the group consisting of Si, Ge, and Ti. $M^4$ is one or more elements selected from the group consisting of P, As, and V) and the like are exemplary examples.

As the garnet-type oxide, Li-La-Zr-based oxides such as $Li_7La_3Zr_2O_{12}$ (also referred to as LLZ) are exemplary examples.

The oxide-based solid electrolyte may be a crystalline material or an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds, $Li_{10}GeP_2S_{12}$-based compounds, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes mainly containing $Li_2S$ and $P_2S_5$ and further containing a different raw material. The proportion of $Li_2S$ that is contained in the $Li_2S$-$P_2S_5$-based compound is, for example, 50 to 90 mass% with respect to the entire $Li_2S$-$P_2S_5$-based compound. The proportion of $P_2S_5$ that is contained in the $Li_2S$-$P_2S_5$-based compound is, for example, 10 to 50 mass% with respect to the entire $Li_2S$-$P_2S_5$-based compound. In addition, the proportion of the different raw material that is contained in the $Li_2S$-$P_2S_5$-based compound is, for example, 0 to 30 mass% with respect to the entire $Li_2S$-$P_2S_5$-based compound. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$LiI$-$LiBr$, $Li_2S$-$P_2S_5$-$Li_2O$, $Li_2S$-$P_2S_5$-$Li_2O$-$LiI$, $Li_2S$-$P_2S_5$-$Z_mS_n$ (m and n are positive numbers. Z is Ge, Zn, or Ga.), and the like are exemplary examples.

As the $Li_2S$-$SiS_2$-based compounds, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$P_2S_5$-$LiCl$, $Li_2S$-$SiS_2$-$Li_3PO_4$, $Li_2S$-$SiS_2$-$Li_2SO_4$, $Li_2S$-$SiS_2$-$Li_xMO_y$ (x and y are positive numbers. M is P, Si, Ge, B, Al, Ga, or In.), and the like are exemplary examples.

As the $Li_2S$-$GeS_2$-based compounds, $Li_2S$-$GeS_2$, $Li_2S$-$GeS_2$-$P_2S_5$, and the like are exemplary examples.

The sulfide-based solid electrolyte may be a crystalline material or an amorphous material.

(Hydride-based solid electrolyte)

As the hydride-based solid electrolyte material, $LiBH_4$, $LiBH_4$-$3KI$, $LiBH_4$-$PI_2$, $LiBH_4$-$P_2S_5$, $LiBH_4$-$LiNH_2$, $3LiBH_4$-$LiI$, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, $Li_4(BH_4)(NH_2)_3$, and the like can be exemplary examples.

(Polymer-based solid electrolyte)

As the polymer-based solid electrolyte, for example, organic polymer electrolytes such as polymer compounds containing one or more selected from the group consisting of a polyethylene oxide-based polymer compound, a polyorganosiloxane chain, and a polyoxyalkylene chain can be exemplary examples. In addition, it is also possible to use a so-called gel-type solid electrolyte in which a non-aqueous electrolytic solution is held in the polymer compound.

Two or more solid electrolytes can be jointly used as long as the effect of the invention is not impaired.

(Conductive material and binder)

As the conductive material that the positive electrode active material layer 111 has, the materials described in the above-described (conductive material) can be used. In addition, as for the proportion of the conductive material in the positive electrode mixture, the proportions described in the above-described (conductive material) can be applied in the same manner. In addition, as the binder that the positive electrode has, the materials described in the above-described (binder) can be used.

(Positive electrode current collector)

As the positive electrode current collector 112 that the positive electrode 110 has, the materials described in the above-described (positive electrode current collector) can be used.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported by the positive electrode current collector 112 by preparing a paste of a mixture of CAM, the solid electrolyte, the conductive material, and the binder using an organic solvent to produce a positive electrode mixture, applying and drying the positive electrode mixture to be obtained on at least one surface of the positive electrode current collector 112, and fixing the positive electrode mixture by pressing.

In addition, the positive electrode active material layer 111 may be supported by the positive electrode current collector 112 by preparing a paste of a mixture of CAM, the solid electrolyte, and the conductive material using an organic solvent to produce a positive electrode mixture, applying and drying the positive electrode mixture to be obtained on at least one surface of the positive electrode current collector 112, and calcining the positive electrode mixture.

As the organic solvent that can be used for the positive electrode mixture, the same organic solvent as the organic solvent that can be used in the case of preparing the paste of the positive electrode mixture described in the above-described (positive electrode current collector) can be used.

As a method of applying the positive electrode mixture to the positive electrode current collector 112, the methods described in the above-described section (positive electrode current collector) are exemplary example.

The positive electrode 110 can be produced by the method exemplified above. As a combination of specific materials that are used for the positive electrode 110, CAM described in the present embodiment and combinations shown in Table 1 are exemplary examples.

[Table 1]

| Solid electrolyte | Binder | Conductive material |
|---|---|---|
| Perovskite-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| NASICON-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| LISICON-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| Garnet-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

[Table 2]

| Solid electrolyte | Binder | Conductive material |
|---|---|---|
| $Li_2S$-$P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$SiS_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$GeS_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$B_2S_3$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

[Table 3]

| Solid electrolyte | Binder | Conductive material |
|---|---|---|
| LiI-Si$_2$S-P$_2$S$_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| LiI-LizS-PzOs-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| LiI-Li$_3$PO$_4$-P$_2$S$_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| Li$_{10}$GeP$_2$Si$_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

As a method for supporting the negative electrode active material layer 121 by the negative electrode current collector 122, similar to the case of the positive electrode 110, a method in which the negative electrode active material layer 121 is formed by pressurization, a method in which a paste-form negative electrode mixture containing a negative electrode active material is applied and dried on the negative electrode current collector 122 and then the negative electrode active material layer 121 is compressed by pressing, and a method in which a paste-form negative electrode mixture containing a negative electrode active material is applied, dried and then calcined on the negative electrode current collector 122 are exemplary examples.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method in an aspect that the negative electrode active material layer 121 comes into contact with the surface of the solid electrolyte layer 130.

In the lithium secondary battery having the above-described configuration, since LiMO that is produced by the present embodiment described above is used as CAM, it is possible to improve the initial efficiency of a lithium secondary battery for which this CAM is used.

In addition, since positive electrodes having the above-described configuration have CAM having the above-described configuration, it is possible to improve the initial efficiencies of lithium secondary batteries.

Furthermore, since the lithium secondary battery having the above-described configuration has the positive electrode described above, the lithium secondary battery becomes a secondary battery having a high initial efficiency.

[Examples]

Next, the present invention will be described in more detail using examples.

<Composition analysis>

The composition analysis of MCC to be produced by a method to be described below was performed by the method described in the section <<Composition analysis of MCC>>.

<Relative standard deviation, mode, and average crystallite size of crystallite size distribution of metal composite compound>

The relative standard deviation, mode, and average crystallite size of the crystallite size distribution of MCC were each obtained by the methods described in the section «Relative standard deviation of crystallite size distribution of metal composite compound», the section <<Mode of crystallite size distribution of metal composite compound>> and the section <<Average crystallite size in crystallite size distribution of metal composite compound>>.

<Mode/average crystallite size>

The value of the mode/average crystallite size was obtained from the values of the mode and the average crystallite size obtained above.

<d90 - d10>

d90 and d10 of MCC were obtained according to the section <<Method for measuring d90 and d10>>. d90 - d10 was obtained from the obtained d10 and d90.

<Calculation of initial efficiency>

CAM was produced by the method described in the section <Production of lithium metal composite oxide>. Furthermore, a positive electrode for a lithium secondary battery was produced by the method described in the section <Production of positive electrode for lithium secondary battery>. Furthermore, a lithium secondary battery was produced by the method described in the section <Production of lithium secondary battery>. The initial efficiency was calculated by the method described in the section <Charge and discharge test> using the obtained lithium secondary battery.

<Example 1>

First, water was poured into a reaction vessel equipped with a stirring device and an overflow pipe, a sodium hydroxide aqueous solution was supplied thereto, and the liquid temperature was held at 70°C.
A nickel sulfate aqueous solution, a cobalt sulfate aqueous solution, and an aluminum sulfate aqueous solution were mixed together to prepare a first raw material element-containing aqueous solution 1.
As a second raw material element-containing aqueous solution 1, an aqueous solution containing aluminum sulfate was prepared. At this time, the first raw material element-containing aqueous solution 1 and the second raw material element-containing aqueous solution 1 were adjusted so that the ratio S2/S1 between the total concentration S1 (unit: g/L) of Co and Al in the first raw material element-containing aqueous solution 1 and the concentration S2 (unit: g/L) of Al in the second raw material element-containing aqueous solution 1 became 3.7.
Next, the first raw material element-containing aqueous solution 1 from a supply port 1, an ammonium sulfate aqueous solution as a complexing agent, and the second raw material element-containing aqueous solution 1 from a supply port 2 were continuously added to the reaction vessel under stirring in proportions at which the atomic ratio of Ni, Co, and Al in the reaction vessel became 88.0:9.0:3.0. In addition, a sodium hydroxide aqueous solution was timely supplied so that the pH of the solution in the reaction vessel reached 11.6 (when measured at a liquid temperature of 40°C).
At this time, the flow rates of the sodium hydroxide aqueous solution, the ammonium sulfate aqueous solution, the first raw material element-containing aqueous solution 1, and the second raw material element-containing aqueous solution 1 were adjusted under a condition where the flow rate of the first raw material element-containing aqueous solution 1 became faster than the flow rate of the second raw material element-containing aqueous solution 1 and a condition where the residence time of coprecipitates in the reaction vessel reached 7.1 hours. Therefore, nickel cobalt aluminum composite hydroxide particles were obtained. At this time, N1/N2 was 1.0.
The nickel cobalt aluminum composite hydroxide particles were washed, then, dewatered with a centrifuge, isolated, and dried at 105°C, thereby obtaining a nickel cobalt aluminum composite hydroxide 1 as MCC.

<Example 2>

First, water was poured into a reaction vessel equipped with a stirring device and an overflow pipe, a sodium hydroxide aqueous solution was supplied thereto, and the liquid temperature was held at 55°C.
A nickel sulfate aqueous solution and a cobalt sulfate aqueous solution were mixed together to prepare a first raw material element-containing aqueous solution 2.
As a second raw material element-containing aqueous solution 2, an aqueous solution containing manganese sulfate was prepared. At this time, the first raw material element-containing aqueous solution 2 and the second raw material element-containing aqueous solution 2 were prepared so that the ratio S2/S1 between the concentration S1 (unit: g/L) of Co in the first raw material element-containing aqueous solution 2 and the concentration S2 (unit: g/L) of Mn in the second raw material element-containing aqueous solution 2 became 3.9.
Next, the first raw material element-containing aqueous solution 2 from a supply port 1, an ammonium sulfate aqueous solution as a complexing agent, and the second raw material element-containing aqueous solution 2 from a supply port 2 were continuously added to the reaction vessel under stirring in proportions at which the atomic ratio of Ni, Co, and Mn in the reaction vessel became 55.0:20.0:25.0. In addition, a sodium hydroxide aqueous solution was timely supplied so that the pH of the solution in the reaction vessel reached 10.7 (when measured at a liquid temperature of 40°C).
At this time, the flow rates of the sodium hydroxide aqueous solution, the ammonium sulfate aqueous solution, the first raw material element-containing aqueous solution 2, and the second raw material element-containing aqueous solution 2 were adjusted under a condition where the flow rate of the first raw material element-containing aqueous solution 2 became faster than the flow rate of the second raw material element-containing aqueous solution 2 and a condition where the residence time of coprecipitates in the reaction vessel reached 10.5 hours. Therefore, nickel cobalt manganese composite hydroxide particles were obtained. At this time, N1/N2 was 1.0.

The nickel cobalt manganese composite hydroxide particles were washed, then dewatered with a centrifuge, isolated, and dried at 105°C, thereby obtaining a nickel cobalt manganese composite hydroxide 1 as a metal composite compound.

<Comparative Example 1>

First, water was poured into a reaction vessel equipped with a stirring device and an overflow pipe, a sodium hydroxide aqueous solution was supplied thereto, and the liquid temperature was held at 40°C.

A nickel sulfate aqueous solution and a cobalt sulfate aqueous solution were mixed together to prepare a first raw material element-containing aqueous solution 3.

As a second raw material element-containing aqueous solution 3, an aqueous solution containing aluminum sulfate was prepared. At this time, the first raw material element-containing aqueous solution 3 and the second raw material element-containing aqueous solution 3 were adjusted so that the ratio S2/S1 between the total concentration S1 (unit: g/L) of Co in the first raw material element-containing aqueous solution 3 and the concentration S2 (unit: g/L) of Al in the second raw material element-containing aqueous solution 3 became 0.8.

Next, the first raw material element-containing aqueous solution 3 from a supply port 1, an ammonium sulfate aqueous solution as a complexing agent, and the second raw material element-containing aqueous solution 3 from a supply port 2 were continuously added to the reaction vessel under stirring in proportions at which the atomic ratio of Ni, Co, and Al in the reaction vessel became 88.0:9.0:3.0. A sodium hydroxide aqueous solution was timely supplied so that the pH of the solution in the reaction vessel reached 11.9 (when measured at a liquid temperature of 40°C).

At this time, the flow rates of the sodium hydroxide aqueous solution, the ammonium sulfate aqueous solution, the first raw material element-containing aqueous solution 3, and the second raw material element-containing aqueous solution 3 were adjusted under a condition where the flow rate of the first raw material element-containing aqueous solution 3 became faster than the flow rate of the second raw material element-containing aqueous solution 3 and a condition where the residence time of coprecipitates in the reaction vessel reached 14.2 hours. Therefore, nickel cobalt aluminum composite hydroxide particles were obtained. At this time, N1/N2 was 1.0.

The nickel cobalt aluminum composite hydroxide particles were washed, then, dewatered with a centrifuge, isolated, and dried at 105°C, thereby obtaining a nickel cobalt aluminum composite hydroxide 2 as a metal composite compound.

<Example 3>

First, water was poured into a reaction vessel equipped with a stirring device and an overflow pipe, a sodium hydroxide aqueous solution was supplied thereto, and the liquid temperature was held at 70°C.

A nickel sulfate aqueous solution and a cobalt sulfate aqueous solution were mixed together to prepare a first raw material element-containing aqueous solution 4.

As a second raw material element-containing aqueous solution 4, an aqueous solution containing manganese sulfate was prepared. At this time, the first raw material element-containing aqueous solution 4 and the second raw material element-containing aqueous solution 4 were prepared so that the ratio S2/S1 between the concentration S1 (unit: g/L) of Co in the first raw material element-containing aqueous solution 4 and the concentration S2 (unit: g/L) of Mn in the second raw material element-containing aqueous solution 4 became 166.4.

Next, the first raw material element-containing aqueous solution 4 from a supply port 1, an ammonium sulfate aqueous solution as a complexing agent, and the second raw material element-containing aqueous solution 4 from a supply port 2 were continuously added to the reaction vessel under stirring in proportions at which the atomic ratio of Ni, Co, and Mn in the reaction vessel became 90.5:0.5:9.0. In addition, a sodium hydroxide aqueous solution was timely supplied so that the pH of the solution in the reaction vessel reached 11.6 (when measured at a liquid temperature of 40°C).

At this time, the flow rates of the sodium hydroxide aqueous solution, the ammonium sulfate aqueous solution, the first raw material element-containing aqueous solution 4, and the second raw material element-containing aqueous solution 4 were adjusted under a condition where the flow rate of the first raw material element-containing aqueous solution 4 became faster than the flow rate of the second raw material element-containing aqueous solution 4 and a condition where the residence time of coprecipitates in the reaction vessel reached 7.2 hours. Therefore, nickel cobalt manganese composite hydroxide particles were obtained. At this time, N1/N2 was 1.0.

The nickel cobalt manganese composite hydroxide particles were washed, then dewatered with a centrifuge, isolated, and dried at 105°C, thereby obtaining a nickel cobalt manganese composite hydroxide 2 as a metal composite compound.

<Example 4>

First, water was poured into a reaction vessel equipped with a stirring device and an overflow pipe, a sodium hydroxide aqueous solution was supplied thereto, and the liquid temperature was held at 75°C.

A nickel sulfate aqueous solution and a cobalt sulfate aqueous solution were mixed together to prepare a first raw material element-containing aqueous solution 5.

As a second raw material element-containing aqueous solution 5, an aqueous solution containing manganese sulfate was prepared. At this time, the first raw material element-containing aqueous solution 5 and the second raw material element-containing aqueous solution 5 were prepared so that the ratio S2/S1 between the concentration S1 (unit: g/L) of Co in the first raw material element-containing aqueous solution 5 and the concentration S2 (unit: g/L) of Mn in the second raw material element-containing aqueous solution 5 became 375.0.

Next, the first raw material element-containing aqueous solution 5 from a supply port 1, an ammonium sulfate aqueous solution as a complexing agent, and the second raw material element-containing aqueous solution 5 from a supply port 2 were continuously added to the reaction vessel under stirring in proportions at which the atomic ratio of Ni, Co, and Mn in the reaction vessel became 90.5:0.5:9.0. In addition, a sodium hydroxide aqueous solution was timely supplied so that the pH of the solution in the reaction vessel reached 11.3 (when measured at a liquid temperature of 40°C).

At this time, the flow rates of the sodium hydroxide aqueous solution, the ammonium sulfate aqueous solution, the first raw material element-containing aqueous solution 5, and the second raw material element-containing aqueous solution 5 were adjusted under a condition where the flow rate of the first raw material element-containing aqueous solution 5 became faster than the flow rate of the second raw material element-containing aqueous solution 5 and a condition where the residence time of coprecipitates in the reaction vessel reached 8.5 hours. Therefore, nickel cobalt manganese composite hydroxide particles were obtained. At this time, N1/N2 was 1.0.

The nickel cobalt manganese composite hydroxide particles were washed, then dewatered with a centrifuge, isolated, and dried at 105°C, thereby obtaining a nickel cobalt manganese composite hydroxide 3 as a metal composite compound.

<Example 5>

First, water was poured into a reaction vessel equipped with a stirring device and an overflow pipe, a sodium hydroxide aqueous solution was supplied thereto, and the liquid temperature was held at 70°C.

A nickel sulfate aqueous solution and a manganese sulfate aqueous solution were mixed together to prepare a first raw material element-containing aqueous solution 6.

As a second raw material element-containing aqueous solution 6, an aqueous solution containing aluminum sulfate was prepared. At this time, the first raw material element-containing aqueous solution 6 and the second raw material element-containing aqueous solution 6 were prepared so that the ratio S2/S1 between the concentration S1 (unit: g/L) of Mn in the first raw material element-containing aqueous solution 6 and the concentration S2 (unit: g/L) of Al in the second raw material element-containing aqueous solution 6 became 14.7.

Next, the first raw material element-containing aqueous solution 6 from a supply port 1, an ammonium sulfate aqueous solution as a complexing agent, and the second raw material element-containing aqueous solution 6 from a supply port 2 were continuously added to the reaction vessel under stirring in proportions at which the atomic ratio of Ni, Mn, and Al in the reaction vessel became 93.0:3.5:3.5. In addition, a sodium hydroxide aqueous solution was timely supplied so that the pH of the solution in the reaction vessel reached 10.7 (when measured at a liquid temperature of 40°C).

At this time, the flow rates of the sodium hydroxide aqueous solution, the ammonium sulfate aqueous solution, the first raw material element-containing aqueous solution 6, and the second raw material element-containing aqueous solution 6 were adjusted under a condition where the flow rate of the first raw material element-containing aqueous solution 6 became faster than the flow rate of the second raw material element-containing aqueous solution 6 and a condition where the residence time of coprecipitates in the reaction vessel reached 9.9 hours. Therefore, nickel manganese aluminum composite hydroxide particles were obtained. At this time, N1/N2 was 1.0.

The nickel manganese aluminum composite hydroxide particles were washed, then, dewatered with a centrifuge, isolated, and dried at 105°C, thereby obtaining a nickel manganese aluminum composite hydroxide 1 as a metal composite compound.

The values of S2/S1, N1/N2, the residence times, the compositions of the obtained MCC, the relative standard deviations, the modes, the average crystallite sizes, the mode/average crystallite size, d90 - d10, and the initial efficiencies of lithium secondary batteries are each shown in Table 4 below.

[Table 4]

| | Composition | | | S2/S1 | N1/N2 | Residence time (h) | Relative standard deviation | Mode (Å) | Average crystallite size (Å) | Mode/average crystallite size | d90 - d10 (Å) | Initial efficiency (%) |
|---|---|---|---|---|---|---|---|---|---|---|---|---|
| | 1-x-y (Ni) | x (Co) | y (M) | | | | | | | | | |
| Example 1 | 0.879 | 0.089 | 0.032 | 3.7 | 1.0 | 7.1 | 0.99 | 64.4 | 174.4 | 0.37 | 317.9 | 89.5 |
| Example 2 | 0.553 | 0.200 | 0.247 | 3.9 | 1.0 | 10.5 | 0.74 | 84.8 | 160.8 | 0.53 | 246.6 | 86.1 |
| Example 3 | 0.904 | 0.005 | 0.091 | 166.4 | 1.0 | 7.2 | 0.70 | 102.3 | 185.4 | 0.55 | 274.6 | 85.2 |
| Example 4 | 0.906 | 0.006 | 0.088 | 375.0 | 1.0 | 8.5 | 0.70 | 105.6 | 191.7 | 0.55 | 280.5 | 85.6 |
| Example 5 | 0.929 | 0.000 | 0.071 | 14.7 | 1.0 | 9.9 | 0.87 | 99.9 | 231.9 | 0.43 | 382.0 | 88.5 |
| Comparative Example 1 | 0.880 | 0.090 | 0.030 | 0.8 | 1.0 | 14.2 | 0.48 | 67.1 | 116.2 | 0.58 | 61.5 | 77.7 |

It was possible to confirm that the lithium secondary batteries for which CAM in which MCC of Examples 1 to 5 were each used as a raw material had higher initial efficiencies than those in the case of using MCC of Comparative Example 1.

[Reference Signs List]

1: Separator
2: Positive electrode
3: Negative electrode
4: Electrode group
5: Battery can
6: Electrolytic solution
7: Top insulator
8: Sealing body
10: Lithium secondary battery
21: Positive electrode lead
31: Negative electrode lead
100: Laminate
110: Positive electrode
111: Positive electrode active material layer
112: Positive electrode current collector
113: External terminal
120: Negative electrode
121: Negative electrode active material layer
122: Negative electrode current collector
123: External terminal
130: Solid electrolyte layer
200: Exterior body
200a: Opening portion
1000: All-solid-state lithium secondary battery

**Claims**

1. A metal composite compound,
   wherein, in a powder X-ray diffraction measurement using CuKα rays, a relative standard deviation of a volume-based crystallite size distribution calculated from a diffraction peak in a range of $2\theta = 19 \pm 1°$ is 0.50 or more.

2. The metal composite compound according to Claim 1,
   wherein a mode of the crystallite size distribution is 50 Å or more.

3. The metal composite compound according to Claim 1 or 2,
   wherein an average crystallite size in the crystallite size distribution is 120 Å or more.

4. The metal composite compound according to any one of Claims 1 to 3,
   wherein a mode/average crystallite size, which is a ratio between a mode of the crystallite size distribution and an average crystallite size in the crystallite size distribution, is 0.57 or less.

5. The metal composite compound according to any one of Claims 1 to 4,

   wherein Formula (A) below is satisfied,

$$80 \text{ Å} \leq d90 - d10 \cdots \text{ Formula (A)}$$

   (in Formula (A), d10 is a crystallite size (Å) at which an area proportion from a small size side is 10% with respect to a total area of a region surrounded by a crystallite size distribution function curve and a horizontal axis in the crystallite size distribution function curve, in which the horizontal axis is a volume-based crystallite size in the crystallite size distribution and a vertical axis is a probability density function of a crystallite with respect to the crystallite size, and d90 is a crystallite size (Å) at which the area proportion from the small size side is 90% with respect to the total area).

6. The metal composite compound according to any one of Claims 1 to 5, that is represented by Composition Formula (I) below,

$$Ni_{1-x-y}Co_xM_yO_z(OH)_{2-\alpha} \text{ ...} \qquad \text{Formula (I)}$$

(in Composition Formula (I), $0 \leq x \leq 0.5$, $0 \leq y \leq 0.5$, $0 \leq x + y < 1$, $0 \leq z \leq 3$, $-0.5 \leq \alpha \leq 2$, and $\alpha - z < 2$ are satisfied and M is one or more elements selected from the group consisting of Mn, Fe, Cu, Ti, Mg, Al, Zn, Sn, Zr, Nb, Ga, W, Mo, B, and Si).

7. A method for producing a lithium metal composite oxide, comprising:

a mixing step of mixing the metal composite compound according to any one of Claims 1 to 6 and a lithium compound; and
a calcining step of calcining an obtained mixture in an oxygen-containing atmosphere at a temperature of 500°C or higher and 1000°C or lower.

8. A method for producing a metal composite compound, comprising:

a slurry preparation step of supplying a first raw material element-containing aqueous solution containing Ni and a different element, a second raw material element-containing aqueous solution containing the different element, and an alkaline aqueous solution to a reaction vessel to obtain a coprecipitate-containing slurry; and
a separation step of dewatering and drying the coprecipitate-containing slurry,
wherein, in the slurry preparation step, the first raw material element-containing aqueous solution and the second raw material element-containing aqueous solution are each supplied from different supply ports under a condition where a total flow rate of the first raw material element-containing aqueous solution is the largest, and when a total concentration of the different element in the first raw material element-containing aqueous solution is defined as S1 (unit: g/L), and a total concentration of the different element in the second raw material element-containing aqueous solution is defined as S2 (unit: g/L), S2/S1, which is a ratio of S2 to S1, satisfies $0.8 < S2/S1 \leq 210.0$.

9. A method for producing a metal composite compound, comprising:

a slurry preparation step of supplying a first raw material element-containing aqueous solution containing Ni and a different element, a second raw material element-containing aqueous solution containing the different element, and an alkaline aqueous solution to a reaction vessel to obtain a coprecipitate-containing slurry; and
a separation step of dewatering and drying the coprecipitate-containing slurry,
wherein, in the slurry preparation step, the first raw material element-containing aqueous solution and the second raw material element-containing aqueous solution are each supplied from different supply ports under a condition where a total flow rate of the first raw material element-containing aqueous solution is the largest, and when a total concentration of the different element in the first raw material element-containing aqueous solution is defined as S1 (unit: g/L), and a total concentration of the different element in the second raw material element-containing aqueous solution is defined as S2 (unit: g/L), S2/S1, which is a ratio of S2 to S1, satisfies $0.8 < S2/S1 \leq 400.0$.

10. The method for producing a metal composite compound according to Claims 8 or 9,
wherein, in the slurry preparation step, when a total number of supply ports through which the first raw material element-containing aqueous solution is supplied to the reaction vessel is defined as N1, and a total number of supply ports through which a raw material element-containing aqueous solution other than the first raw material element-containing aqueous solution is supplied to the reaction vessel is defined as N2, $N1/N2 \geq 1.0$ is satisfied.

11. The method for producing a metal composite compound according to any one of Claims 8 to 10,
wherein, in the slurry preparation step, a flow rate of a liquid raw material that is supplied to the reaction vessel is adjusted to a condition where a residence time of a coprecipitate in the coprecipitate-containing slurry in the reaction vessel is 10.5 hours or shorter.

FIG. 1

FIG. 2

EP 4 310 055 A1

# INTERNATIONAL SEARCH REPORT

International application No.

**PCT/JP2022/009161**

## A. CLASSIFICATION OF SUBJECT MATTER

*C01G 53/00*(2006.01)i; *H01M 4/505*(2010.01)i; *H01M 4/525*(2010.01)i
FI:    C01G53/00 A; H01M4/525; H01M4/505

According to International Patent Classification (IPC) or to both national classification and IPC

## B. FIELDS SEARCHED

Minimum documentation searched (classification system followed by classification symbols)

C01G53/00; H01M4/505; H01M4/525

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2019-003955 A (SUMITOMO CHEMICAL CO) 10 January 2019 (2019-01-10)<br>example 1 | 1-11 |
| X | JP 2018-206775 A (SUMITOMO CHEMICAL CO) 27 December 2018 (2018-12-27)<br>example 1 | 1-11 |
| A | JP 2016-199414 A (ASAHI GLASS CO LTD) 01 December 2016 (2016-12-01)<br>claims | 1-11 |
| A | WO 2018/021556 A1 (SUMITOMO METAL MINING CO) 01 February 2018 (2018-02-01)<br>claims, examples | 1-11 |
| A | JP 2020-172426 A (SUMITOMO CHEMICAL CO) 22 October 2020 (2020-10-22)<br>claims, examples | 1-11 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **06 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/009161**

| Patent document cited in search report | | | Publication date (day/month/year) | Patent family member(s) | | | Publication date (day/month/year) |
|---|---|---|---|---|---|---|---|
| JP | 2019-003955 | A | 10 January 2019 | (Family: none) | | | |
| JP | 2018-206775 | A | 27 December 2018 | US | 2020/0083532 | A1 | |
| | | | | example 1 | | | |
| | | | | WO | 2018/221442 | A1 | |
| | | | | EP | 3633774 | A1 | |
| | | | | CN | 110692154 | A | |
| | | | | KR | 10-2020-0014293 | A | |
| JP | 2016-199414 | A | 01 December 2016 | US | 2016/0301065 | A1 | |
| | | | | claims | | | |
| | | | | CN | 106058236 | A | |
| WO | 2018/021556 | A1 | 01 February 2018 | US | 2019/0296348 | A1 | |
| | | | | claims, examples | | | |
| | | | | KR | 10-2019-0036525 | A | |
| | | | | CN | 109843811 | A | |
| JP | 2020-172426 | A | 22 October 2020 | (Family: none) | | | |

Form PCT/ISA/210 (patent family annex) (January 2015)

**EP 4 310 055 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021042576 A
- JP 2022015158 A
- JP H10310433 A
- JP 2002201028 A
- WO 2019098384 A1
- US 20200274158 A1
- JP 2000030686 A
- US 20090111025 A1
- JP 2004095400 A
- WO 2020208872 A1
- US 20160233510 A1
- US 20120251871 A1
- US 20180159169 A1
- US 20200259213 A1